# EUROPÄISCHE PATENTSCHRIFT

(11) **EP 2 798 013 B1**
(45) Veröffentlichungstag und Bekanntmachung des Hinweises auf die Patenterteilung: **17.08.2016**
(21) Anmeldenummer: 12809207.9
(22) Anmeldetag: 14.12.2012
(51) Int. Cl.: C09D 5/00, G02B 1/11, G03F 7/09

(54) **ANTIREFLEXIONSBESCHICHTUNG**
ANTI-REFLECTIVE COATING
COUCHE ANTIREFLET

(30) Priorität: 30.12.2011 DE 102011057180
(43) Veröffentlichungstag der Anmeldung: 05.11.2014
(73) Patentinhaber: Leibniz-Institut für Neue Materialien gemeinnützige GmbH, 66123 Saarbrücken (DE)
(72) Erfinder: DE OLIVEIRA, Peter William, 66123 Saarbrücken (DE); CARVALHO MENEZES, Elisabete Henriquetta Soares de, Marco Belém-PA CEP 66080-472 (BR); JILAVI, Mohammad, 66459 Kirkel (DE); KÖNIG, Peter, 66822 Lebach (DE)
(74) Vertreter: Patentanwälte Gierlich & Pischitzis Partnerschaft mbB
(86) Internationale Anmeldenummer: PCT/EP2012/075492
(87) Internationale Veröffentlichungsnummer: WO 2013/098090

(56) Entgegenhaltungen:
- CN-A- 102 061 112
- CLÉMENT SANCHEZ ET AL: "Applications of advanced hybrid organic-inorganic nanomaterials: from laboratory to market", CHEMICAL SOCIETY REVIEWS, Bd. 40, Nr. 2, 1. Januar 2011 (2011-01-01) , Seite 696, XP055028551, ISSN: 0306-0012, DOI: 10.1039/c0cs00136h

## Beschreibung

### Gebiet der Erfindung

Die Erfindung betrifft eine Antireflexionsbeschichtung, insbesondere eine einschichtige Antireflexionsbeschichtung, sowie ein Verfahren zur Herstellung einer solchen Beschichtung und ihre Verwendung.

### Stand der Technik

*Physical vapour deposition* (PVD) und *chemical vapour deposition* (CVD) sind übliche Verfahren zur Herstellung von Antireflexionsbeschichtungen. Allerdings machen die für diese Verfahren benötigten Vakuumanlagen die Herstellung solcher Beschichtungen sehr teuer, insbesondere für große Oberflächen. Nasschemische Methoden, wie die Sol-Gel-Methode, sind dabei günstige Verfahren zur Herstellung von Antireflexionsbeschichtungen auch für große Oberflächen. In der Regel werden hochwertige Antireflexionsbeschichtungen durch mehrschichtige Beschichtungen erreicht. Dies ist nicht nur zeitaufwändig, sondern auch teuer, insbesondere wegen der aufwändigeren thermischen Härtung. Es hat sich gezeigt, dass die Industrie daher einschichtige Beschichtungen für große Flächen und große Stückzahlen benötigt, wie zum Beispiel für Solarzellen. Solche einschichtigen Beschichtungen zeigen eine breitbandige Transmission des solaren Spektrums, welche gerade für Solarzellen benötigt werden.

Nach bisher üblichen Verfahren werden solche einschichtige oder einlagige Antireflexionsschichten aus porösem SiO₂ im Sol-Gel-Verfahren hergestellt.

Die Porosität der Beschichtungen, insbesondere durch die eingeschlossene Luft, reduziert dabei den Brechungsindex der Beschichtung von theoretisch 1,5 (reines SiO₂) auf 1,1 - 1,45 in Abhängigkeit von der Porosität und des Herstellungsverfahrens der SiO₂-Martix (1, 2, 3, 4, 5). Die Porosität muss daher genau gesteuert werden, um hochwertige Beschichtungen zu erhalten. Eine bekannte Klasse von Verbindungen, welche poröse Strukturen aufbauen sind die Koordinationspolymere, insbesondere die sogenannten metal-organic frameworks (MOFs) (6, 7, 8, 9, 10). Dies sind Verbindungen, welche aus über Liganden verbrückten metallorganische Zentren bestehen. Durch die geeignete Wahl der Liganden und der metallorganischen Zentren ist es in diesen Verbindungen möglich, die Porosität der erhaltenen Struktur einzustellen. Dabei kann auch das verwendete Lösungsmittel oder Lösungsmittelgemisch eine Rolle spielen. Diese Verbindungen werden vor allem im Bereich der Katalyse eingesetzt, da die enthaltenen Metallzentren oft auch eine katalytische Wirkung haben. Daher werden die Verbindungen in der Regel auch nicht thermisch behandelt, da dann diese Fähigkeiten verloren gehen. Antireflexionsbeschichtungen mit MOFs sind nicht bekannt.

CN 10206112A offenbart eine Zusammensetzung für optische Beschichtungen, umfassend ein Sol und ein Koordinationspolymer.

Es ist daher die Aufgabe der Erfindung eine Antireflexionsbeschichtung bereitzustellen, welche eine bessere Kontrolle der Porosität der Beschichtung erlaubt.

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindungen umfassen auch alle sinnvollen und insbesondere alle erwähnten Kombinationen von unabhängigen und/oder abhängigen Ansprüchen.

Die Aufgabe wird durch eine Beschichtungszusammensetzung gelöst, welche mindestens eine hydrolysierbare Silanverbindung, mindestens eine hydrolysierbare Metallverbindung, wobei die Verbindung auch teilweise hydrolysiert und/oder kondensiert vorliegen kann, mindestens eine organische Verbindung mit mindestens zwei funktionellen koordinativen Gruppen oder Vorstufen davon und mindestens ein Lösungsmittel umfasst, wobei die mindestens eine hydrolysierbare Silanverbindung, die mindestens eine hydrolysierbare Metallverbindung und die mindestens eine organische Verbindung zumindest teilweise ein Koordinationspolymer bilden.

Der Begriff "mindestens eine organische Verbindung mit mindestens zwei funktionellen koordinativen Gruppen" bezeichnet eine organische Verbindung, die mindestens zwei funktionelle Gruppen enthält, die in der Lage ist, zu einem gegebenen Metallion koordinative Bindungen aufzubauen. Bevorzugt sind dabei organische Gruppen, welche zwei oder mehr funktionelle Bindungen aufbauen können. Bevorzugt sind dabei organische Verbindungen, welche über die funktionellen Gruppen koordinative Bindungen zu zwei oder mehr, bevorzugt zu zwei Metallatomen ausbilden können. Solche bevorzugten Verbindungen sind besonders zum Aufbau von Koordinationspolymeren geeignet.

Ohne an eine bestimmte Theorie gebunden zu sein, wird angenommen, dass in der Zusammensetzung Koordinationspolymere, insbesondere MOFs gebildet werden. Dazu dienen insbesondere die hydrolysierbare Metallverbindung und die organische Verbindung. Allerdings wird auch die Silanverbindung an der Bildung des MOFs beteiligt sein. Insgesamt hat der Aufbau eines solchen Koordinationspolymers den Vorteil, dass sich in der Zusammensetzung ein definiertes Gerüst bildet, welche zu einer definierten Porenbildung führt.

Die koordinativen Bindungen müssen dabei nicht zu einer einzelnen Verbindung ausgebildet werden. Es ist auch möglich, dass die organische Verbindung Kondensate der Metallverbindung und/oder der Silanverbindung verbindet. Es ist natürlich auch möglich, dass sich ein Teil der Verbindungen, welche nicht am MOF beteiligt sind, innerhalb der Poren einlagert.

Die definierte Struktur innerhalb der Zusammensetzung ist auch für die hergestellte Antireflexionsbeschichtung von großer Bedeutung. Zur Herstellung der Antireflexionsbeschichtung wird die aufgetragene Zusammensetzung thermisch behandelt. Dabei wird das Lösungsmittel entfernt und die organischen Bestandteile, d.h. auch die organischen Verbindungen, werden in der Regel ausgebrannt. Dennoch hat die sich in der Zusammensetzung gebildete Struktur einen Einfluss auf die Struktur der späteren Antireflexionsschicht, insbesondere auf deren poröse Struktur, welche wichtig für den erhaltenen Brechungsindex ist. Dadurch ist es möglich durch eine definierte Struktur in der Zusammensetzung die Struktur der späteren Antireflexionsbeschichtung zu beeinflussen.

Die Zusammensetzung enthält mindestens eine hydrolysierbare Silanverbindung. Dies ist bevorzugt eine Verbindung der Formel

R¹ₐSiX₄₋ₐ (I)

wobei X für einen oder mehrere hydrolysierbare Reste, welche gleich oder verschieden sein können, steht.

Geeignete Beispiele für hydrolysierbare Reste X der obigen Formeln sind Wasserstoff, Halogen (F, Cl, Br oder I, insbesondere Cl oder Br), Alkoxy (z.B. C₁₋₆- Alkoxy, wie z.B. Methoxy, Ethoxy, n-Propoxy, i-Propoxy und n-, i-, sek.- oder tert.-Butoxy), Aryloxy (vorzugsweise C₆₋₁₀-Aryloxy, wie z.B. Phenoxy), Alkaryloxy, z.B. Benzoyloxy, Acyloxy (z.B. C₁₋₆-Acyloxy, vorzugsweise C₁₋₄-Acyloxy, wie z.B. Acetoxy oder Propionyloxy) und Alkylcarbonyl (z.B. C₂₋₇-Alkylcarbonyl wie Acetyl). Ebenfalls geeignet sind NH₂, mit Alkyl, Aryl und/oder Aralkyl mono oder disubstituiertes Amino, wobei Beispiele für die Alkyl-, Aryl und/oder Aralkylreste die nachstehend für R¹ angegebenen sind, Amido wie Benzamido oder Aldoxim oder Ketoximgruppen. Zwei oder drei Gruppen X können auch miteinander verbunden sein, z.B. bei Si-Polyolkomplexen mit Glycol, Glycerin oder Brenzcatechin. Die genannten Gruppen können gegebenenfalls Substituenten, wie Halogen, Hydroxy, Alkoxy, Amino oder Epoxy, enthalten. Bevorzugte hydrolytisch abspaltbare Reste X sind Halogen, Alkoxygruppen und Acyloxygruppen. Besonders bevorzugte hydrolytisch abspaltbare Reste sind C₁₋₄- Alkoxygruppen, insbesondere Methoxy und Ethoxy.

Dabei kann a den Wert 0, 1 oder 2 annehmen, bevorzugt sind Silane mit a gleich 0 oder 1, besonders bevorzugt a gleich 0. Dies sind Silane mit vier hydrolysierbaren Resten, welche bevorzugt alle identisch sind.

R¹ steht für einen oder mehrere nicht hydrolysierbare Reste. Dies sind z.B. Alkyl (z.B. C₁₋₂₀-Alkyl, insbesondere C₁₋₄-Alkyl, wie Methyl, Ethyl, n-Propyl, i-Propyl, n-Butyl, i-Butyl, sek.-Butyl und tert.-Butyl), Alkenyl (z.B. C₂₋₂₀-Alkenyl, insbesondere C₂₋₄-Alkenyl, wie Vinyl, 1-Propenyl, 2-Propenyl und Butenyl), Alkinyl (z.B. C₂₋₂₀-Alkinyl, insbesondere C₂₋₄-Alkinyl, wie Ethinyl oder Propargyl), Aryl (insbesondere C₆₋₁₀-Aryl, wie Phenyl und Naphthyl) und entsprechende Aralkyl und Alkarylgruppen, wie Tolyl und Benzyl, und cyclische C₃-C₁₂-Alkyl und - Alkenylgruppen, wie Cyclopropyl, Cyclopentyl und Cyclohexyl.

Die Reste R¹ können übliche Substituenten aufweisen, bei denen es sich um funktionelle Gruppen handeln kann, über die nach Bedarf auch eine Vernetzung möglich ist. Übliche Substituenten sind z.B. Halogen (z.B. Chlor oder Fluor), Epoxid (z.B. Glycidyl oder Glycidyloxy), Hydroxy, Ether, Ester, Amino, Monoalkylamino, Dialkylamino, gegebenenfalls substituiertes Anilino, Amid, Carboxy, Alkenyl, Alkinyl, Acryl, Acryloxy, Methacryl, Methacryloxy, Mercapto, Cyano, Alkoxy, Isocyanato, Aldehyd, Keto, Alkylcarbonyl, Säureanhydrid und Phosphorsäure. Diese Substituenten sind über zweiwertige Brückengruppen, insbesondere Alkylen-, Alkenylen oder Arylen-Brückengruppen, die durch Sauerstoffoder -NH-Gruppen unterbrochen sein können, an das Siliziumatom gebunden. Die Brückengruppen enthalten z. B. 1 bis 18, vorzugsweise 1 bis 8 und insbesondere 1 bis 6 Kohlenstoffatome. Die genannten zweiwertigen Brückengruppen leiten sich z.B. von den oben genannten einwertigen Alkyl-, Alkenyl oder Arylresten ab. Natürlich kann der Rest R¹ auch mehr als eine funktionelle Gruppe aufweisen.

Bevorzugte Beispiele für nicht hydrolysierbare Reste R¹ mit funktionellen Gruppen, über die eine Vernetzung möglich ist, sind ein Glycidyl oder ein Glycidyloxy-(C₁₋₂₀)-alkylen-Rest, wie β-Glycidyloxyethyl, γ-Glycidyloxypropyl, δ-Glycidyloxybutyl, ε-Glycidyloxypentyl, ω-Glycidyloxyhexyl, und 2-(3,4-Epoxy-cyclohexyl)ethyl, ein (Meth) acryloxy-(C₁₋₆) -alkylen-Rest, z.B. (Meth)acryloxymethyl, (Meth)acryloxyethyl, (Meth)acryloxypropyl oder (Meth)acryloxybutyl, und ein 3-Isocyanatopropylrest. Besonders bevorzugte Reste sind γ-Glycidyloxypropyl und (Meth)acryloxypropyl. Hierbei steht (Meth)acryl für Acryl und Methacryl.

Bevorzugte Reste R¹, die eingesetzt werden, sind Reste ohne Substituenten oder funktionelle Gruppen, insbesondere Alkylgruppen, vorzugsweise mit 1 bis 4 Kohlenstoffatomen, insbesondere Methyl und Ethyl, sowie Arylreste wie Phenyl.

Beispiele für Silanverbindungen der Formel (I) sind Methyltrimethoxysilan, Methyltriethoxysilan, Ethyltriethoxysilan, Isobutyltrimethoxysilan, Isobutyltriethoxysilan, Octyltriethoxysilan, Octyltrimethoxysilan, (3-Glycidyloxypropyl)methyldiethoxysilan, (3-Glycidyloxypropyl)trimethoxysilan, Phenyltrimethoxysilan oder Phenyltriethoxysilan, Tetraalkoxysilane wie Tetramethoxysilan (Si(OCH₃)₄), Tetraethoxysilan (Si(OC₂H₅)₄), Tetrapropoxysilan Si (O-n- oder i-C₃H₇)₄, Si (OC₄H₉)₄, sowie SiCl₄, HSiCl₃, Si(OOCCH₃)₄ oder Gemische solcher Silanverbindungen, wobei Tetraalkoxysilane wie Tetramethoxysilan (Si (OCH₃)₄), Tetraethoxysilan (Si (OC₂H₅)₄), Tetrapropoxysilan Si (O-n- oder i-C₃H₇)₄, Si(OC₄H₉)₄, sowie SiCl₄, HSiCl₃, Si(OOCCH₃)₄ oder Gemische davon bevorzugt sind. Besonders bevorzugt sind Tetraalkoxysilane wie Tetramethoxysilan oder Tetraethoxysilan oder deren Gemische.

Die Zusammensetzung enthält außerdem eine hydrolysierbare Metallverbindung.

Die Metallverbindung ist eine hydrolysierbare Metallverbindung, d.h. die enthält mindestens eine Gruppe, welcher durch Reaktion mit Wasser ausgetauscht werden kann, d.h. welche hydrolytisch abspaltbar ist.

Solche Verbindungen sind beispielsweise Halogenide, wie Fluoride, Chloride, Bromide oder Iodide, Alkoxide, Carbonsäureverbindungen, Cyanide oder Sulfide.

In einer Weiterbildung der Erfindung ist die Verbindung eine Verbindung der Formel (II):

MXₙ (II)

wobei M ausgewählt ist aus den Gruppen Ia, IIa, IIIa, IVa bis VIa und Ib bis VIIIb. Besonders bevorzugt sind Mg, Ca, Sr, Ba, Sc, Y, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, B, Al, Ga, In, Tl, Si, Ge, Sn, Pb, As, Sb und Bi. Besonders bevorzugt sind Zn, Al, Mg, Ca, Ti, Zr, Cu, Ni, Fe, Pd, Pt, Ru, Rh und Co. Insbesondere bevorzugt sind Zn, Al, Ti, Zr, Ni, Cu, Mg, Ca, Fe. In Bezug auf die Ionen dieser Elemente sind besonders zu erwähnen Mg²⁺, Ca²⁺, Sr²⁺, Ba²⁺, Sc³⁺, Y³⁺, Ti⁴⁺, Zr⁴⁺, Hf⁴⁺, V⁴⁺, V³⁺, V²⁺, Nb³⁺, Ta³⁺, Cr³⁺, Mo³⁺, W³⁺, Mn³⁺, Mn²⁺, Re³⁺, Re²⁺, Fe³⁺, Fe²⁺, Ru³⁺, Ru²⁺, Os³⁺, Os²⁺, Co³⁺, Co²⁺, Rh²⁺, Rh⁺, Ir²⁺, Ir⁺, Ni²⁺, Ni⁺, Pd²⁺, Pd⁺, Pt²⁺, Pt⁺, Cu²⁺, Cu⁺, Ag⁺, Au⁺, Zn²⁺, Cd²⁺, Hg²⁺, Al³⁺, Ga³⁺, In³⁺, Tl³⁺, Si⁴⁺, Si²⁺, Ge⁴⁺, Ge²⁺, Sn⁴⁺, Sn²⁺, Pb⁴⁺, Pb²⁺, As⁵⁺, As³⁺, As⁺, Sb⁵⁺, Sb³⁺, Sb⁺, Bi⁵⁺, Bi³⁺ und Bi⁺. Dabei entspricht n der Wertigkeit des Metalls.

Ebenfalls einsetzbar sind z.B. hydrolysierbare Verbindungen von Elementen der Hauptgruppen I und II des Periodensystems (z.B. Na, K, Ca und Mg) und der Nebengruppen V bis VIII des Periodensystems (z.B. Mn, Cr, Fe und Ni). Auch hydrolysierbare Verbindungen der Lanthanoide wie Ce können verwendet werden. Bevorzugt sind Metallverbindungen, wobei M gleich Al, B, Sn, Fe, Ti, Zr, V oder Zn ist, bevorzugt Al, Fe, Ti oder Zr, wobei Ti besonders bevorzugt ist. Es können auch Mischungen mehrere Metallverbindungen eingesetzt werden.

X ein hydrolysierbarer Rest ist, welcher bevorzugt wie in Formel (I) definiert ist, wobei zwei Gruppen X durch eine Oxogruppe ersetzt sein können.

Bevorzugte Metallverbindungen sind z. B. die Alkoxide oder Halogenide von B, Al, Zr und insbesondere Ti. Geeignete hydrolysierbare Metallverbindungen sind z. B. Al (OCH₃)₃, Al (OC₂H₅)₃, Al (O-n-C₃H₇)₃, Al (O-i-C₃H₅)₃, Al (O-n-C₄H₉)₃, Al (O-sek.-C₄H₉)₃) AlCl₃, AlCl (OH)₂, Al (OC₂H₄OC₄H₉)₃, TiCl₄, Ti(OC₂H₅)₄, Ti (O-n-C₃H₇)₄, Ti (O-i-C₃H₇)₄, Ti (OC₄H₉)₄, Ti (2-ethylhexoxy)₄, ZrCl₄, Zr(OC₂H₅)₄, Zr(O-n-C₃H₇)₄, Zr(O-i-C₃H₇)₄, Zr(OC₄H₉)₄, ZrOCl₂, Zr(2-ethylhexoxy)₄, sowie Zr- oder Ti-Verbindungen, die komplexierende Reste aufweisen, wie z.B. β-Diketon und (Meth)acrylreste, Borsäure, BCl₃, B(OCH₃)₃, B(OC₂H₅)₃, SnCl₄, Sn (OCH₃)₄, Sn(OC₂H₅)₄, VOCl₃ und VO(OCH₃)₃. Die Metallverbindungen können auch teilweise oder vollständig hydrolysiert vorliegen, z.B. TiOCl₂. Dies kann dadurch erreicht werden, dass diese Verbindungen vor der Zugabe zu der Zusammensetzung mit Wasser umgesetzt werden, bevorzugt mit einem Überschuss an Wasser z.B. im 2 bis 10 fachen Überschuss gemessen an den hydrolysierbaren Gruppen der Verbindung, d.h. 2 bis 10 mol Wasser pro mol hydrolysierbarer Gruppe. Die Hydrolyse kann aber auch mit stöchiometrischen oder unterstöchiometrischen Mengen an Wasser erfolgen.

Als funktionelle Gruppen der mindestens einen organischen Verbindung, über die die genannten koordinativen Bindungen ausgebildet werden können, sind insbesondere beispielsweise folgende funktionellen Gruppen zu nennen: -CO₂H, -NH₂, -OH, -SH, -CS₂H, - NO₂, -B(OH)₂, -SO₃H, -Ge(OH)₃, -Sn(OH)₃, -Si(SH)₄, -Ge(SH)₄, - Sn(SH)₃, -PO₃H, -AsO₃H, -AsO₄H, -P(SH)₃, -As(SH)₃, -CH(RSH)₂, - C(RSH)₃, -CH(RNH₂)₂, -C(RNH₂)₃, -CH(ROH)₂, -C(ROH)₃, -CH(RCN)₂, - C(RCN)₃ wobei R beispielsweise bevorzugt eine Alkylengruppe mit 1, 2, 3, 4 oder 5 Kohlenstoffatomen wie beispielsweise eine Methylen-, Ethylen-, n-Propylen-, i-Propylen, n-Butylen-, i-Butylen-, tert-Butylen- oder n-Pentylengruppe, oder eine Arylgruppe, enthaltend 1 oder 2 aromatische Kerne wie beispielsweise 2 C₆-Ringe, die gegebenenfalls kondensiert sein können und unabhängig voneinander mit mindestens jeweils einem Substituenten geeignet substituiert sein können, und/oder die unabhängig voneinander jeweils mindestens ein Heteroatom wie beispielsweise N, O und/oder S enthalten können. Gemäß ebenfalls bevorzugten Ausführungsformen sind funktionelle Gruppen zu nennen, bei denen der oben genannte Rest R nicht vorhanden ist. Diesbezüglich sind unter anderem -CH(SH)₂, -C(SH)₃, -CH(NH₂)2, -C(NH₂)₃, - CH(OH)₂, -C(OH)₃, -CH(CN)₂ oder -C(CN)₃ zu nennen.

Bevorzugte Gruppen sind Aminogruppe, Carbonsäuregruppen, Hydroxylgruppen und Thiole oder Vorstufen solcher Gruppen, wobei Carbonsäuren bevorzugt sind.

Vorstufen für Carbonsäuregruppen sind beispielsweise Anhydridgruppen, Ester oder Amide. Die Verbindung kann auch mehrere verschiedene solcher Gruppen und/oder Vorstufen enthalten.

Die mindestens zwei funktionellen Gruppen können grundsätzlich an jede geeignete organische Verbindung gebunden sein, solange gewährleistet ist, dass die diese funktionellen Gruppen aufweisende organische Verbindung zur Ausbildung der koordinativen Bindung und zur Herstellung des Gerüstmaterials befähigt ist, d.h. zur koordinativen Bindung zu mindestens einer Metallverbindungen und/oder mindestens einer Silanverbindung.

Bevorzugt leiten sich die organischen Verbindungen, die die mindestens zwei funktionellen Gruppen enthalten, von einer gesättigten oder ungesättigten aliphatischen Verbindung oder einer aromatischen Verbindung oder einer sowohl aliphatischen als auch aromatischen Verbindung ab.

Die aliphatische Verbindung oder der aliphatische Teil der sowohl aliphatischen als auch aromatischen Verbindung kann linear und/oder verzweigt und/oder cyclisch sein, wobei auch mehrere Cyclen pro Verbindung möglich sind. Weiter bevorzugt enthält die aliphatische Verbindung oder der aliphatische Teil der sowohl aliphatischen als auch aromatischen Verbindung 1 bis 15, weiter bevorzugt 1 bis 14, weiter bevorzugt 1 bis 13, weiter bevorzugt 1 bis 12, weiter bevorzugt 1 bis 11 und insbesondere bevorzugt 1 bis 10 C-Atome wie beispielsweise 1, 2, 3, 4, 5, 6, 7, 8, 9 oder 10 C-Atome. Insbesondere bevorzugt sind hierbei unter anderem Methan, Adamantan, Acetylen, Ethylen oder Butadien.

Die aromatische Verbindung oder der aromatische Teil der sowohl aromatischen als auch aliphatischen Verbindung kann einen oder auch mehrere Kerne wie beispielsweise zwei, drei, vier oder fünf Kerne aufweisen, wobei die Kerne getrennt voneinander und/oder mindestens zwei Kerne in kondensierter Form vorliegen können. Besonders bevorzugt weist die aromatische Verbindung oder der aromatische Teil der sowohl aliphatischen als auch aromatischen Verbindung einen, zwei oder drei Kerne auf, wobei einer oder zwei Kerne besonders bevorzugt sind. Unabhängig voneinander kann weiter jeder Kern der genannten Verbindung mindestens ein Heteroatom wie beispielsweise N, O, S, B, P, Si, Al, bevorzugt N, O und/oder S enthalten. Weiter bevorzugt enthält die aromatische Verbindung oder der aromatische Teil der sowohl aromatischen als auch aliphatischen Verbindung einen oder zwei C₆-Kerne, wobei die zwei entweder getrennt voneinander öder in kondensierter Form vorliegen. Insbesondere sind als aromatische Verbindungen Benzol, Naphthalin und/oder Biphenyl und/oder Bipyridyl und/oder Pyridyl zu nennen.

Beispielsweise sind unter anderem trans-Muconsäure oder Fumarsäure oder Phenylenbisacrylsäure zu nennen.

Beispielsweise sind im Rahmen der vorliegenden Erfindung Dicarbonsäuren wie etwa Oxalsäure, Bernsteinsäure, Weinsäure, 1,4-Butandicarbonsäure, 4-Oxo-Pyran-2,6-dicarbonsäure, 1,6-Hexandicarbonsäure, Decandicarbonsäure, 1,8-Heptadecandicarbonsäure, 1,9-Heptadecandicarbonsäure, Heptadecandicarbonsäure, Acetylendicarbonsäure, 1,2-Benzoldicarbonsäure, 2,3-Pyridindicarbonsäure, Pyridin-2,3-dicarbonsäure, 1,3-Butadien-1,4-dicarbonsäure, 1,4-Benzoldicarbonsäure, p-Benzoldicarbonsäure, Imidazol-2,4-dicarbonsäure, 2-Methyl-chinolin-3,4-dicarbonsäure, Chinolin-2,4-dicarbonsäure, Chinoxalin-2,3-dicarbonsäure, 6-Chlorchinoxalin-2,3-dicarbonsäure, 4,4'-Diaminphenylmethan-3,3'-dicarbonsäure, Chinolin-3,4-dicarbonsäure, 7-Chlor-4-hydroxychinolin-2,8-dicarbonsäure, Diimiddicarbonsäure, Pyridin-2,6-dicarbonsäure, 2-Methylimidazol-4,5-dicarbonsäure, Thiophen-3,4-dicarbonsäure, 2-Isopropylimidazol-4,5-dicarbonsäure, Tetrahydropyran-4,4-dicarbonsäure, Perylen-3,9-dicarbonsäure, Perylendicarbonsäure, Pluriol E 200-dicarbonsäure, 3,6-Dioxaoctandicarbonsäure, 3,5-Cyclohexadien-1,2-dicarbonsäure, Octadicarbonsäure, Pentan-3,3-carbonsäure, 4,4'-Diamino-1,1'-diphenyl-3,3'-dicarbon-säure, 4,4'-Diaminodiphenyl-3,3'-dicarbonsäure, Benzidin-3,3'-dicarbonsäure, 1,4-Bis-(phenylamino)-benzol-2,5-dicarbonsäure, 1,1'-Dinaphthyldicarbonsäure, 7-Chlor-8-methylchinolin-2,3-dicarbonsäure, 1-Anilinoanthrachinon-2,4'-dicarbonsäure, Poly-tetrahydrofuran-250-dicarbonsäure, 1,4-Bis-(carboxymethyl)-piperazin-2,3-dicarbonsäure, 7-Chlorchinolin-3,8-dicarbonsäure, 1-(4-Carboxy)-phenyl-3-(4-chlor)-phenylpyrazolin-4,5-dicarbonsäure, 1,4,5,6,7,7,-Hexachlor-5-norbornen-2,3-dicarbonsäure, Phenylindandicarbonsäure, 1,3-Dibenzyl-2-oxo-imidazolidin-4,5-dicarbonsäure, 1,4-Cyclohexandicarbonsäure, Naphthalin-1,8-dicarbonsäure, 2-Benzoylbenzol-1,3-dicarbonsäure, 1,3-Dibenzyl-2-oxoimidazolidin-4,5-cis-dicarbonsäure, 2,2'-Bichinolin-4,4'-di-carbonsäure, Pyridin-3,4-dicarbonsäure, 3,6,9-Trioxaundecandicarbonsäure, Hydroxybenzophenondicarbonsäure, Pluriol E 300-dicarbonsäure, Pluriol E 400-dicarbonsäure, Pluriol E 600-dicarbonsäure, Pyrazol-3,4-dicarbonsäure, 2,3-Pyrazindicarbonsäure, 5,6-Dimethyl-2,3-pyrazindicarbonsäure, 4,4'-Diaminodiphenyletherdiimiddicarbonsäure, 4,4'-Diaminodiphenylmethandiimiddicarbonsäure, 4,4'-Diaminodiphenylsulfondiimiddicarbonsäure, 2,6-Naphthalindicarbonsäure, 1,3-Adamantandicarbonsäure, 1,8-Naphthalindicarbonsäure, 2,3-Naphthalindicarbonsäure, 8-Methoxy-2,3-naphthalindicarbonsäure, 8-Nitro-2,3-naphthalincarbonsäure, 8-Sulfo-2,3-naphthalindicarbonsäure, Anthracen-2,3-dicarbonsaure, 2',3'-Diphenyl-p-terphenyl-4,4 "-dicarbonsäure, Diphenylether-4,4'-dicarbonsäure, Imidazol-4,5-dicarbonsäure, 4-(1H)-Oxothiochromen-2,8-dicarbonsäure, 5-tert-Butyl-1,3-benzoldicarbonsäure, 7,8-Chinolindicarbonsäure, 4,5-Imidazoldicarbonsäure, 4-Cyclohexen-1,2-dicarbonsäure, Hexatriacontandicarbonsäure, Tetradecandicarbonsäure, 1,7-Heptadicarbonsäure, 5-Hydroxy-1,3-Benzoldicarbonsäure, Pyrazin-2,3-dicarbonsäure, Furan-2,5-dicarbonsäure, 1-Nonen-6,9-dicarbonsäure, Eicosendicarbonsäure, 4,4'-Dihydroxydiphenylmethan-3,3'-dicarbonsäure, 1-Amino-4-methyl-9,10-dioxo-9,10-dihydroanthracen-2,3-dicarbonsäure, 2,5-Pyridindicarbonsäure, Cyclohexen-2,3-dicarbonsäure,2,9-Dichlorfluorubin-4,11-dicarbonsäure, 7-Chlor-3-methylchinolin-6,8-dicarbonsäure, 2,4-Dichlorbenzophenon-2',5'-dicarbonsäure, 1,3-Benzoldicarbonsäure, 2,6-Pyridindicarbonsäure, 1-Methylpyrrol-3,4-dicarbonsäure, 1-Benzyl-1H-pyrrol-3,4-dicarbonsäure, Anthrachinon-1,5-dicarbonsäure, 3,5-Pyrazoldicarbonsäure, 2-Nitrobenzol-1,4-dicarbonsäure, Heptan-1,7-dicarbonsäure, Cyclobutan-1,1-dicarbonsäure 1,14-Tetradecandicarbonsäure, 5,6-Dehydronorbornan-2,3-dicarbonsäure oder 5-Ethyl-2,3-pyridindicarbonsäure, Tricarbonsäuren wie etwa 2-Hydroxy-1,2,3-propantricarbonsäure, 7-Chlor-2,3,8-chinolintricarbonsäure, 1,2,4-Benzoltricarbonsäure, 1,2,4-Butantricarbonsäure, 2-Phosphono-1,2,4-butantricarbonsäure, 1,3,5-Benzoltricarbonsäure, 1-Hydroxy-1,2,3-Propantricarbonsäure, 4,5-Dihydro-4,5-dioxo-1H-pyrrolo[2,3-F]chinolin-2,7,9-tricarbonsäure, 5-Acetyl-3-amino-6-methyibenzol-1,2,4-tricarbonsäure, 3-Amino-5-benzoyl-6-methylbenzol-1,2,4-tricarbonsäure, 1,2,3-Propantricarbonsäure oder Aurintricarbonsäure oder Tetracarbonsäuren wie etwa 1,1-Dioxidperylo[1,12-BCD]thiophen-3,4,9,10-tetracarbonsäure, Perylentetracarbonsäuren wie Perylen-3,4,9,10-tetracarbonsäure oder Perylen-1,12-sulfon-3,4,9,10-tetracarbonsäure, Butantetracarbonsäuren wie 1,2,3,4-Butantetracarbonsäure oder Meso-1,2,3,4-Butantetracarbonsäure, Decan-2,4,6,8-tetracarbonsäure, 1,4,7,10,13,16-Hexaoxacyclooctadecan-2,3,11,12-tetracarbonsäure, 1,2,4,5-Benzoltetracarbonsäure, 1,2,11,12-Dodecantetracarbonsäure, 1,2,5,6-Hexan-tetracarbonsäure, 1,2,7,8-Octantetracarbonsäure, 1,4,5,8-Naphthalintetracarbonsäure, 1,2,9,10-Decantetracarbonsäure, Benzophenontetracarbonsäure, 3,3',4,4'-Benzophenontetracarbonsäure, Tetrahydrofurantetracarbonsäure oder Cyclopentantetracarbonsäuren wie Cyclopentan-1,2,3,4-tetracarbonsäure zu nennen.

Ganz besonders bevorzugt werden gegebenenfalls mindestens einfach substituierte mono-, di-, tri-, tetra- oder höherkernige aromatische Di-, Tri- oder Tetracarbonsäuren eingesetzt, wobei jeder der Kerne mindestens ein Heteroatom enthalten kann, wobei zwei oder mehr Kerne gleiche oder unterschiedliche Heteroatome enthalten kann. Beispielsweise bevorzugt werden monokernige Dicarbonsäuren, monokernige Tricarbonsäuren, monokernige Tetracarbonsäuren, dikernige Dicarbonsäuren, dikernige Tricarbonsäuren, dikernige Tetracarbonsäuren, trikernige Dicarbonsäuren, trikernige Tricarbonsäuren, trikernige Tetracarbonsäuren, tetrakernige Dicarbonsäuren, tetrakernige Tricarbonsäuren und/oder tetrakernige Tetracarbonsäuren. Geeignete Heteroatome sind beispielsweise N, O, S, B, P, Si, Al, bevorzugte Heteroatome sind hierbei N, S und/oder O. Als geeigneter Substituent ist diesbezüglich unter anderem -OH, eine Nitrogruppe, eine Aminogruppe oder eine Alkyl- oder Alkoxygruppe zu nennen.

Insbesondere bevorzugt werden als mindestens zweizähnige organische Verbindungen Acetylendicarbonsäure (ADC), Benzoldicarbonsäuren, Naphthalindicarbonsäuren, Biphenyldicarbonsäuren wie beispielsweise 4,4'-Biphenyldicarbonsäure (BPDC), Bipyridindicarbonsäuren wie beispielsweise 2,2'-Bipyridindicarbonsäuren wie beispielsweise 2,2'-Bipyridin-5,5'-dicarbonsäure, Benzoltricarbonsäuren wie beispielsweise 1,2,3-Benzoltricarbonsäure oder 1,3,5-Benzoltricarbonsäure (BTC), 1,3,5,7-Adamantantetracarbonsäure (ATC), Adamantandibenzoat (ADB) Benzoltribenzoat (BTB), Methantetrabenzoat (MTB), Adamantantetrabenzoat, 1,2,4,5-Benzoltetracarbonsäure oder Dihydroxyterephthalsäuren wie beispielsweise 2,5-Dihydroxyterephthalsäure (DHBDC), 1,2,4,5-Benzoltetracarbonsäure- (= Pyromellitsäure), 3,3'-4,4'-Biphenyltetracarbonsäure, 3,3'-4,4'-Benzophenontetracarbonsäure (= 3,3'-4,4'-Benzoylbenzoltetracarbonsäure), 3,3'-4,4'-Isopropylidendiphthalsäure, 3,3'-4,4'-Oxydiphthalsäure und (Hexafluoroisopropyliden)diphthalsäure eingesetzt.

Ganz besonders bevorzugt werden unter anderem Isophthalsäure, Terephthalsäure, 2,5-Dihydroxyterephthalsäure, 1,2,3-Benzoltricarbonsäure, 1,3,5-Benzoltricarbonsäure, 1,2,4,5-Benzoltetracarbonsäure oder 2,2'-Bipyridin-5,5'-dicarbonsäure eingesetzt.

Neben den vorstehend genannten Verbindungen können auch Vorstufen oder Varianten dieser Säuren eingesetzt werden wie z. B. ihre Anhydride, Ester oder Amide. Falls Lösungsmittel mit Hydroxylgruppen eingesetzt werden, wie z.B. niedere Alkohole wie Methanol, Ethanol, Isopropanol oder tert.-Butanol, können sich auch in der Zusammensetzung die entsprechenden Ester bilden. Bei dem Einsatz von Anhydriden kann über die Zugabe von Wasser die Anzahl der freien Säuregruppen eingestellt werden. Die Anhydride sind insbesondere dann bevorzugt, wenn die in der organischen Verbindung vorhandenen Carbonsäuregruppen innerhalb der Verbindung ein cyclisches Anhydrid bilden können. Für die besonders bevorzugten Verbindungen ist ein solches korrespondierendes Anhydrid 1,2,4,5-Benzoltetracarboxyl-1,2:4,5-Dianhydrid.

Neben diesen mindestens zweizähnigen organischen Verbindungen kann der MOF auch eine oder mehrere einzähnige Liganden umfassen.

Geeignete Lösemittel zur Herstellung der MOF sind u.a. Wasser, Alkohole, vorzugsweise niedere aliphatische Alkohole (C₁-C₈-Alkohole), wie Methanol, Ethanol, 1-Propanol, Isopropanol und 1-Butanol, Ketone, vorzugsweise niedere Dialkylketone, wie Aceton und Methylisobutylketon, Ether, vorzugsweise niedere Dialkylether, wie Diethylether, oder Monoether von Diolen, wie Ethylenglycol oder Propylenglycol, mit C₁-C₆-Alkoholen, Amide, wie Dimethylformamid, Tetrahydrofuran, Dioxan, Sulfoxide wie Dimethylsulfoxid, Sulfone, Acetonitril oder Butylglycol und deren Gemische. Bevorzugt werden Wasser und Alkohole verwendet. Es können auch hochsiedende Lösungsmittel eingesetzt werden, z.B. Polyether wie Triethylenglycol, Diethylenglycoldiethylether und Tetraethylenglycoldimethylether. In manchen Fällen finden auch andere Lösungsmittel Verwendung, z.B. Leichtparaffine (Petrolether, Alkane und Cycloalkane), Aromaten, Toluol, Heteroaromaten und halogenierte Kohlenwasserstoffe wie Chlorbenzol. Anwendung können auch Dicarbonsäureester wie Bernsteinsäuredimethylester, Adipinsäuredimethylester, Glutarsäuredimethylester und deren Mischungen sowie die cyclische Carbonsäureester wie z.B. Propylencarbonat und Glycerincarbonat Verwendung finden.

Bevorzugte Lösungsmittel sind Alkohole und Ether, besonders bevorzugt niedere aliphatische Alkohole wie Methanol, Ethanol, 1-Propanol, Isopropanol und 1-Butanol sowie Ethylenglykol oder Tetrahydrofuran. Bevorzugt sind Tetrahydrofuran oder eine Mischung aus Isopropanol und 1-Butanol, besonders bevorzugt im Verhältnis 10:1 bis 1:10, ganz besonders bevorzugt 2:1 bis 1:2.

Es ist wichtig, dass das gebildete Koordinationspolymer in der erhaltenen Zusammensetzung gelöst ist. Es kann erforderlich sein, die Zusammensetzung vor dem Auftragen zu zentrifugieren oder zu filtrieren. Insofern sind Koordinationspolymere bevorzugt, welche in dem gewählten Lösungsmittel löslich sind.

Gleichzeitig ist es möglich, durch die Wahl des Lösungsmittels die Struktur des erhaltenen Koordinationspolymers zu beeinflussen.

Durch die Selbstorganisation des Koordinationspolymers ist das Verhältnis von Silanverbindung und Metallverbindung zu der organischen Verbindung in weiten Bereichen variabel. Es kann beispielsweise zwischen 100:1 und 1:100 gemessen in mmol von Silizium zu Metallion liegen. Üblicherweise werden die Silanverbindungen und Metallverbindungen im Überschuss zu der organischen Verbindung eingesetzt, bevorzugt im Verhältnis von 100:1 zu 1:1 gemessen in mmol (Summe von Silizium und Metallionen im Verhältnis zur organischen Verbindung), bevorzugt zwischen 50:1 zu 1:1. Das Verhältnis kann davon abhängig sein, wie viele koordinative Bindungen die organische Verbindung ausbilden kann, bzw. wie viele verschiedene Metall- oder Siliziumzentren die organische Verbindung mindestens eine koordinative Bindung ausbilden kann. Das Verhältnis beträgt dabei bevorzugt mindestens n:1, wenn n koordinative Bindungen ausgebildet werden können. Es beträgt dann bevorzugt zwischen 50:n und n:1, bevorzugt zwischen 10:n und n:1. Wenn die organische Verbindung beispielsweise zu zwei Metallionen koordinative Bindungen aufzubauen ist das bevorzugte molare Verhältnis zwischen 50:1 und 2:1, bevorzugt zwischen 30:1 und 2:1, besonders bevorzugt zwischen 10:1 und 2:1.

Eine weitere wichtige Größe ist das Verhältnis zwischen der Silanverbindung und der Metallverbindung. Durch den Aufbau des Koordinationspolymers ist es möglich im Gegensatz zu den reinen auf Silanen basierenden Antireflexionsbeschichtungen einen hohen Gehalt an Metallverbindung in die Struktur des entstehenden SiO₂ zu integrieren, ohne dass die Transmission der erhaltenen Beschichtung signifikant schlechter wird. Gemessen im mmol liegt das Verhältnis zwischen Silizium in der Silanverbindung und dem Metallion in der Metallverbindung bevorzugt zwischen 100:1 und 1:2, besonders bevorzugt zwischen 100:1 und 1:1, ganz besonders bevorzugt zwischen 50:1 und 1:1. Es kann auch zwischen 30:1 und 1:1 oder 20:1 und 1:1 liegen.

Durch den hohen Gehalt an Metallverbindung kann nicht nur der Brechungsindex der Antireflexionsschicht beeinflusst werden. Die Metallverbindung kann der Beschichtung auch noch weitere Eigenschaften, wie erhöhte Härte verleihen.

In einer bevorzugten Weiterbildung ist die Metallverbindung eine Titanverbindung. Dadurch enthält die Antireflexionsschicht einen Anteil Titandioxid, welches photokatalytische Eigenschaften aufweist. Dadurch können der Antireflexionsbeschichtung auch selbstreinigende Eigenschaften verliehen werden. Dabei bilden sich keine separaten Titandioxidpartikel, sondern das Titandioxid wird aufgrund des Koordinationspolymers in die Struktur integriert.

Der Gehalt an Lösungsmittel kann in Abhängigkeit von der weiteren Verarbeitung der Zusammensetzung variieren. In einer bevorzugten Weiterbildung der Erfindung liegt der Gehalt an Silanverbindung(en) und Metallverbindung(en) in der Zusammensetzung zwischen 0,001 mol/l und 10 mol/l, bevorzugt zwischen 0,01 mol/l und 1 mol/l, besonders bevorzugt zwischen 0,1 und 0,8 mol/l.

In Abhängigkeit von der weiteren Verwendung der Zusammensetzung liegt der Feststoffgehalt der Zusammensetzung vor dem Auftragen auf ein Substrat bevorzugt zwischen 1 und 20 Gew.-%, besonders bevorzugt zwischen 2 und 5 Gew.-%.

Die Zusammensetzung kann noch weitere Bestandteile enthalten. Dies können für optische Systeme übliche Additive sein. Beispiele sind Weichmacher, Sensibilisierungsmittel, Netzhilfsmittel, Haftvermittler, Verlaufsmittel, Antioxidationsmittel, Stabilisatoren, Farbstoffe und photochrome oder thermochrome Verbindungen.

In einer Weiterbildung der Erfindung kann die Zusammensetzung noch weitere optisch aktive Substanzen, z.B. zur Beeinflussung des Brechwerts, enthalten. So ist es beispielsweise möglich noch weitere Nanopartikel mit einem Durchmesser von unter 500 nm (gemessen mit TEM) zuzugeben. Dies können beispielsweise SiO₂, ZrO₂ und/oder TiO₂-Partikel sein.

Die Erfindung betrifft außerdem ein Verfahren zur Herstellung einer Antireflexionsbeschichtung.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

In einem ersten Schritt wird dabei eine vorstehend beschriebene Zusammensetzung hergestellt. Es kann notwendig sein, die Viskosität und Konzentration der Zusammensetzung an das verwendete Beschichtungsverfahren anzupassen.

In einem nächsten Schritt wird die Zusammensetzung auf ein Substrat aufgetragen. Die Beschichtung kann nach üblichen Methoden erfolgen, z. B. durch Tauchen, Fluten, Rakeln, Gießen, Schleudern, Spritzen, Aufstreichen, Slot-Coating, Meniskus-Coating, Foliengießen, Spinnen oder Sprühen. Die erforderliche Viskosität kann dabei durch Zugabe oder Entfernen von Lösungsmittel eingestellt werden. Bevorzugte Schichtdicken (im gehärteten Zustand) liegen bei 0,01 bis 1 µm. Bevorzugt wird die Auftragsmenge in Abhängigkeit von der gewünschten Brechzahl und dem Anwendungsbereich im allgemeinen so gewählt, dass Schichtdicken im Bereich von 50 bis 200 nm, vorzugsweise 100 bis 150 nm, erzielt werden.

Für die Beschichtung werden vorzugsweise für optische Anwendungen geeignete Substrate ausgewählt, wie beispielsweise Glas, Keramik, Silicium, Metall, Halbleiter-Materialien oder (vorzugsweise transparente) Kunststoffe, wie PET, PE und PP, soweit diese für die thermische Behandlung geeignet sind.

Es sind auch kristalline Materialien möglich. Dabei kann jedes bekannte kristalline Material eingesetzt werden, das für den jeweiligen Zweck geeignet ist. Beispiele für bevorzugte kristalline Substrate sind Substrate aus Silizium, Lithiumniobat, Lithiumtantalat, Quarz, Saphir, anderen Edelsteinen oder Halbedelsteinen und anderen optischen Kristallen, kristallinen Detektoren, z. B. für elektromagnetische Strahlung, wie PbS oder Selen, und optischen Filtern (UV, IR, NIR und VIS), wobei von den kristallinen Substraten Saphir besonders bevorzugt ist. Bei dem kristallinen Substrat handelt es sich bevorzugt um ein transparentes Substrat. Das Substrat kann z. B. auch als Oberflächenschicht auf einem Träger aus einem anderen Material vorliegen.

Das Substrat kann jede gewünschte Gestalt haben. Es kann z. B. plan oder gewölbt, z. B. konkav oder konvex, sein. Das Substrat kann auf einer Seite oder auf beiden Seiten mit einem optischen Mehrschichtsystem versehen sein. Das Substrat kann z. B. in Form einer rechtwinkligen oder runden Scheibe oder einer Linse oder irgendeiner anderen Form vorliegen. In einer bevorzugten Ausführungsform handelt es sich bei dem Substrat um einen Wafer, einen Bildschirm, ein Instrumenten-Deckglas, einen kristallinen Detektor, ein optisches Filter oder ein Uhrglas aus einem kristallinen Material. Bei manchen Einsatzgebieten ist im Handel oder in der Technik für einige Ausführungsformen die Bezeichnung "Gläser" für verwendete kristalline Substrate üblich, z. B. wenn auch echte Gläser für die Anwendung verwendet werden können.

In dem nächsten Schritt wird die aufgetragene Zusammensetzung thermisch behandelt. Dabei wird die Beschichtung bevorzugt auf Temperaturen von 400 bis 800 °C, vorzugsweise 400 bis 600 °C und insbesondere 400 bis 500 °C, aufgeheizt und beispielsweise 1 Minute bis 1 Stunde bei dieser Temperatur gehalten. Hierbei erfolgt ein vollständiges Ausbrennen der organischen (kohlenstoffhaltigen) Bestandteile. Auf diese Weise wird eine anorganische Antireflexionsschicht erhalten.

Das Verfahren ermöglicht es insbesondere schon in einem Schritt, d.h. mit nur einer einlagigen Beschichtung, eine wirksame Antireflexionsschicht mit einer Transmission von über 94 %, bevorzugt über 98 % zu erhalten.

Die durch das Verfahren hergestellten Schichten weisen eine Schichtdicke zwischen 0,01 bis 1 µm auf, bevorzugt im Bereich von 50 bis 200 nm, besonders bevorzugt 100 bis 150 nm.

Sie enthalten außerdem Siliziumdioxid und mindestens ein Metalloxid entsprechend den für die Zusammensetzung angegebenen Verhältnissen. Die Metalloxide sind Metalloxide der Verbindungen, welche für die Zusammensetzung beschrieben wurden.

Bezogen auf die molaren Verhältnisse von Si im Siliziumdioxid und Metallion im Metalloxid, weisen die erhaltenen Beschichtungen einen besonders hohen Anteil an Metalloxid bei Beibehaltung der Antireflexionseigenschaften auf. Das molare Verhältnis liegt bevorzugt zwischen 100:1 und 1:2, besonders bevorzugt zwischen 100:1 und 1:1, ganz besonders bevorzugt zwischen 50:1 und 1:1. Es kann auch zwischen 30:1 und 1:1 oder 20:1 und 1:1 liegen.

Die erhaltenen Schichten zeichnen sich insbesondere durch ihre gleichmäßige Porosität aus. Diese kann, wie beschrieben, durch die Wahl der organischen Verbindung gesteuert werden. Dadurch werden Beschichtungen mit einer nur geringen Variation des Brechungsindex erhalten.

Die Oberfläche kann auch durch ihre BET-Oberfläche charakterisiert werden.

Die erfindungsgemäßen optischen Beschichtungen sind z. B. als Interferenz- und Antireflexsysteme für folgende Anwendungen geeignet:
Optische Filter: Antireflex- und Reflexfilter im Bereich der Brillenindustrie, Displays, Bildschirme, Halbleiterlaser, Mikrolinsen-Beschichtung, Solarzellen, "Damage-Resistant"-Laserschichten, Bandpassfilter, Antireflexionsfilter, Absorptionsfilter und Strahlteiler.

Holographische Schichten: Lichtlenksysteme, Informationsspeicherung, Laserkoppler, Wellenleiter, Dekoration und Architektur.

Prägbare Schichten: Entspiegelungssysteme, Fokussierung in Detektorfeldern, Beleuchtung von Flachbildschirmen, Bildgebung in Fotokopierern, Faseroptiken (Lichteinkopplung).

Lithographie: Herstellung von mikrooptischen Elementen wie Wellenleitern, Gittern, Pinholes, Beugungsgittern (Punktgittern) sowie im Bereich Displaytechnik, Faserchip-Kopplung und abbildende Optik.

Es sind aber auch Beschichtungen für solare Anwendungen, wie Solarkollektoren oder Solarzellen möglich.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.
- Fig. 1: Transmissionsspektren der Proben der Beispiele 5, 6 und 7 im sichtbaren Bereich. Als Vergleich wurde ein unbeschichteter Glasträger vermessen;
- Fig. 2: Reflexionsspektren der Proben der Beispiele 5, 6 und 7 im sichtbaren Bereich;

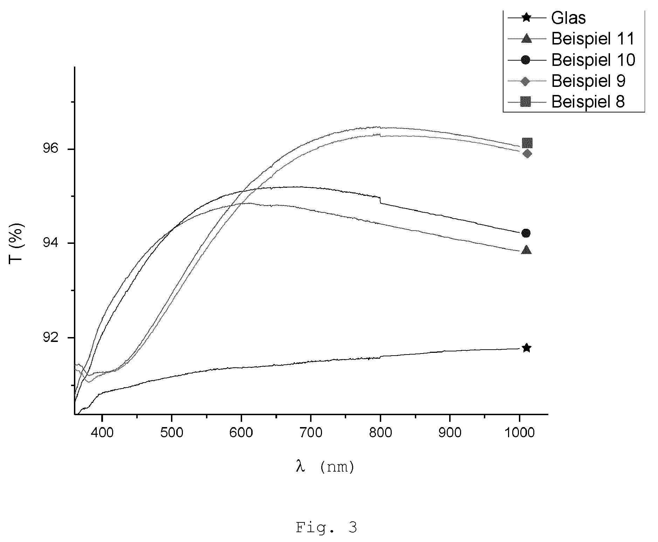

- Fig. 3: Transmissionsspektren der Proben der Beispiele 8 bis 11. Als Vergleich wurde ein unbeschichteter Glasträger vermessen;
- Fig. 4: Lichtmikroskopische Aufnahme der Oberfläche von Beispiel 5 nach einem Kratzfestigkeitstest mit einem Bleistift der Härte 1H;
- Fig. 5: Lichtmikroskopische Aufnahme der Oberfläche von Beispiel 6 nach einem Kratzfestigkeitstest mit einem Bleistift der Härte 8H;
- Fig. 6: Lichtmikroskopische Aufnahme der Oberfläche von Beispiel 7 nach einem Kratzfestigkeitstest mit einem Bleistift der Härte 8H;
- Fig. 7: Lichtmikroskopische Aufnahme der untersuchten Fläche der Oberfläche von Beispiel 5 nach dem Klebeband Test;
- Fig. 8: Lichtmikroskopische Aufnahme der untersuchten Fläche der Oberfläche von Beispiel 6 nach dem Klebeband Test;
- Fig. 9: Lichtmikroskopische Aufnahme der untersuchten Fläche der Oberfläche von Beispiel 7 nach dem Klebeband Test;
- Fig. 10: REM-Aufnahme der Oberfläche von Beispiel 5 mit einer Vergrößerung von 10.000x;
- Fig. 11: REM-Aufnahme der Oberfläche von Beispiel 6 mit einer Vergrößerung von 10.000x;
- Fig. 12: REM-Aufnahme der Oberfläche von Beispiel 7 mit einer Vergrößerung von 10.000x;
- Fig. 13: REM-Aufnahme der Oberfläche von Beispiel 5 mit einer Vergrößerung von 50.000x;
- Fig. 14: REM-Aufnahme der Oberfläche von Beispiel 6 mit einer Vergrößerung von 50.000x;
- Fig. 15: REM-Aufnahme der Oberfläche von Beispiel 7 mit einer Vergrößerung von 50.000x;
- Fig. 16: Untersuchung der photokatalytischen Aktivität der Beschichtung aus Beispiel 11 anhand der Zersetzung von Methylviolett.

### Material und Methoden

### Chemikalien

Pyromellitsäuredianhydrid (1,2,4,5-Benzoltetracarboxyl-1,2:4,5-Dianhydrid; Merck Suchardt OHG); Titan(IV)chlorid (TiCl₄) (Fluka Analytical, Sigma-Aldrich Chemie GmbH); Tetraethoxysilan (TEOS ABCR GmbH & Co. KG); Tetrahydrofuran (THF Alfa-Aesar GmbH & Co KG); Isopropanol (iPrOH CWR International S.A.S.); n-Butanol (n-BuOH Merck Schuchardt OHG). Als Wasser wurde ultrapures Wasser (Millipore) verwendet.

### Herstellung der Beschichtungen

Die hergestellten Beschichtungszusammensetzungen wurden auf Glassubstrate (Marienfeld) aufgetragen. Dazu wurde eine Tauchbeschichtungsmaschine (dip coating) verwendet. Die Beschichtungen wurden bei Geschwindigkeiten von 1, 2, 3, und 4 mm/s hergestellt. Danach wurden alle Beschichtungen bei 500 °C für 2 Stunden thermisch behandelt.

### Beispiel 1

6,67 ml TiCl₄ wurden zu 25 mL Wasser gegeben und für 30 Minuten gerührt.

### Beispiel 2

2,73 g (12,5 mmol) Pyromellitsäuredianhydrid und 225 mg (12,5 mmol) Wasser wurden zu 50,0 ml einer Mischung von iPrOH/ n-BuOH (1:1 v/v; nach Volumen) und für 48 Stunden gerührt.

### Beispiel 3

2,18 g (0,01 mol) Pyromellitsäuredianhydrid und 0,36 g (0,02 mol) Wasser wurden zu 22,5 ml THF gegeben und für 48 h gerührt.

### Beispiel 4

2,73 g (12,5 mmol) Pyromellitsäuredianhydrid und 0,90 g (0,05 mol) Wasser wurden zu 50,0 ml einer Mischung aus iPrOH/ n-BuOH (1:1 v/v) gegeben und für 48 h gerührt.

### Beispiel 5

Zu 25,0 ml einer Mischung von iPrOH/ n-BuOH (1:1 v/v) wurden unter Rühren 5,0 ml von Beispiel 2, 1,30 g (6,25 mmol) TEOS und 0,16 ml von Beispiel 1 gegeben und die Mischung wurde für 6 Stunden gerührt.

### Beispiel 6

Zu 25,0 ml einer Mischung von iPrOH/ n-BuOH (1:1 v/v) wurden unter Rühren 2,82 g von Beispiel 3, 1,30 g (6,25 mmol) TEOS und 0,16 ml von Beispiel 1 gegeben und die Mischung für 6 Stunden gerührt.

### Beispiel 7

Zu Beispiel 4 wurden unter Rühren 6,50 g (31,3 mmol) TEOS und 0,8 ml von Beispiel 1 (zugetropft) gegeben und die Mischung für 6 Stunden gerührt.

### Beispiel 8

Zu 50 mL von Beispiel 4 wurden unter Rühren 3,12 g (14,98 mmol) TEOS, 5.26 ml von Beispiel 1 (zugetropft) und 9,00 ml einer Mischung von iPrOH/ n-BuOH (1:1 v/v) gegeben und die erhaltene Lösung wurde für 6 Stunden gerührt.

### Beispiel 9

Zu 50 mL von Beispiel 4 wurden unter Rühren 3,73 g (17,90 mmol) TEOS, 4,10 ml von Beispiel 1 (zugetropft) und 9,00 ml einer Mischung von iPrOH/ n-BuOH (1:1 v/v) gegeben und die erhaltene Lösung wurde für 6 Stunden gerührt.

### Beispiel 10

Zu 50 mL von Beispiel 4 wurden unter Rühren 4,36 g (20,93 mmol) TEOS, 3,15 ml von Beispiel 1 (zugetropft) und 7,00 ml einer Mischung von iPrOH/ n-BuOH (1:1 v/v) gegeben und die erhaltene Lösung wurde für 6 Stunden gerührt.

### Beispiel 11

Zu 50 mL von Beispiel 4 wurden unter Rühren 4,98 g (23,90 mmol) TEOS, 2,10 ml von Beispiel 1 (zugetropft) und 7,00 ml einer Mischung aus iPrOH/ n-BuOH (1:1 v/v) gegeben und die erhaltene Lösung wurde für 6 Stunden gerührt.

Die Lösungen aller Beispiele wurden vor der Verdünnung mit 0,2 µm Filtern filtriert.

### Charakterisierung der Beschichtungen

### Optische Eigenschaften

Für alle hergestellten Beschichtungen war der antireflektive Effekt schon direkt durch Beobachtung mit dem Auge zu erkennen.

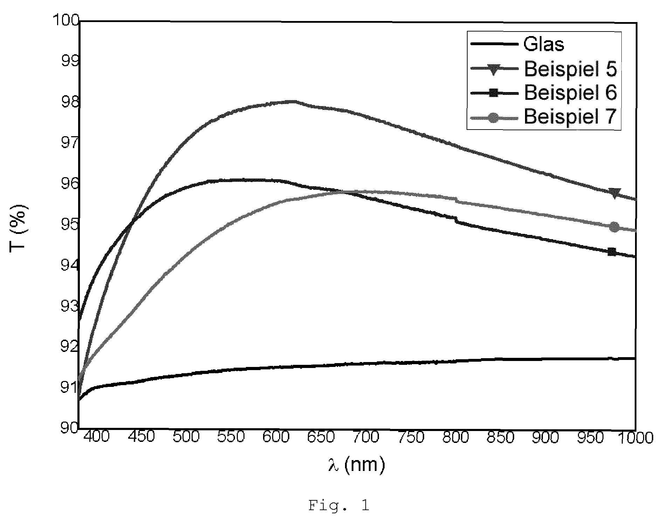

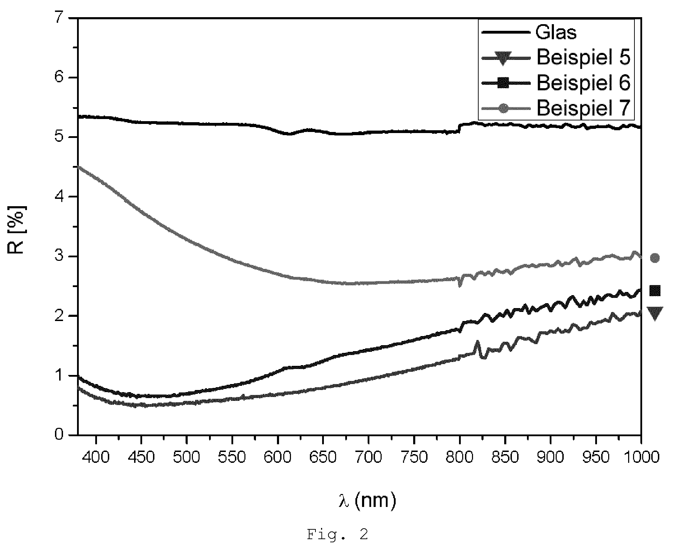

Sowohl Reflexions- als auch Transmissionsspektren wurden mit einem Carry 5000 Spektrometer gemessen. Die Transmissionsspektren und Reflexionsspektren der Beispiele 5 bis 7 sind in den Figuren 1 und 2 gezeigt.

### Messung der mechanischen Stabilität

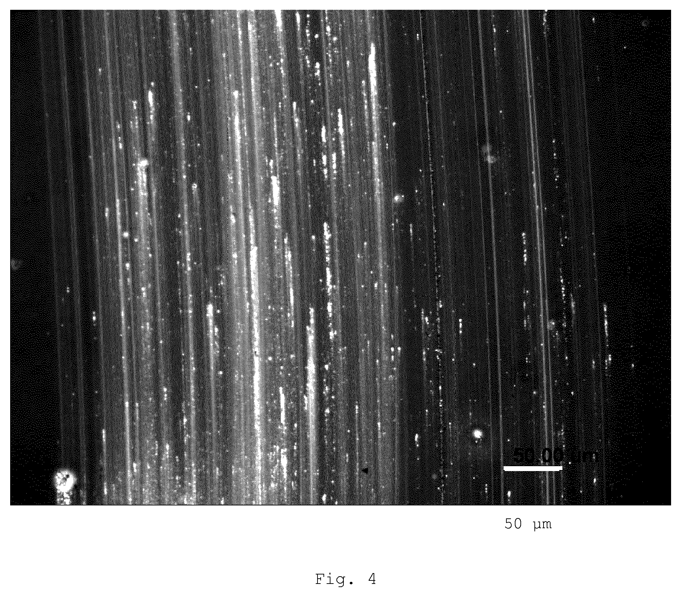

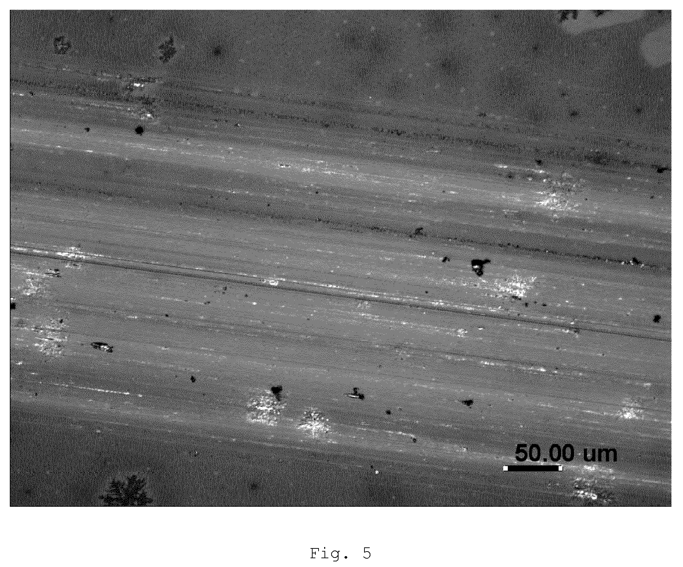

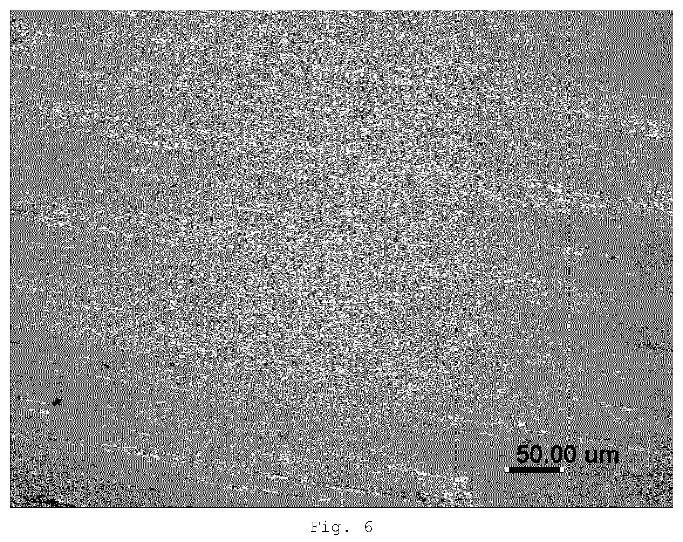

Die Kratzfestigkeit der Beschichtungen wurde mit einem Bleistift-Kratztest nach ASTM D3363 untersucht und mit einem Lichtmikroskop überprüft. Unterschiedliche Bleistifthärten wurden zur Untersuchung der Kratzfestigkeit verwendet. Die Ergebnisse sind in den Figuren 4 bis 6 gezeigt.

### Adhäsionsuntersuchungen

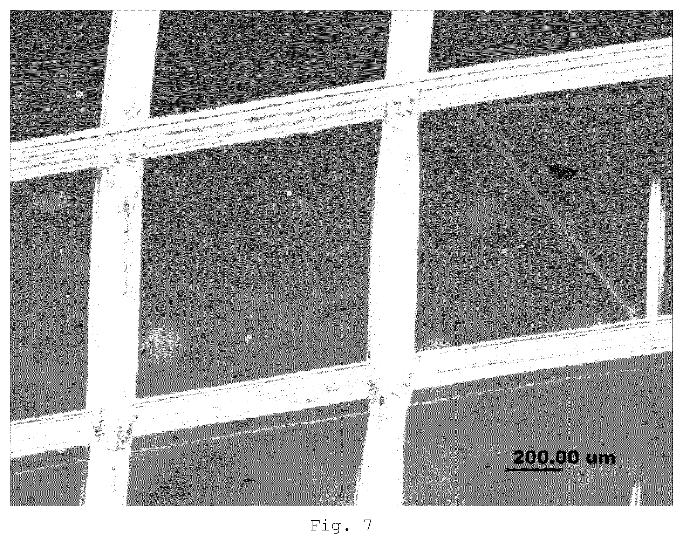

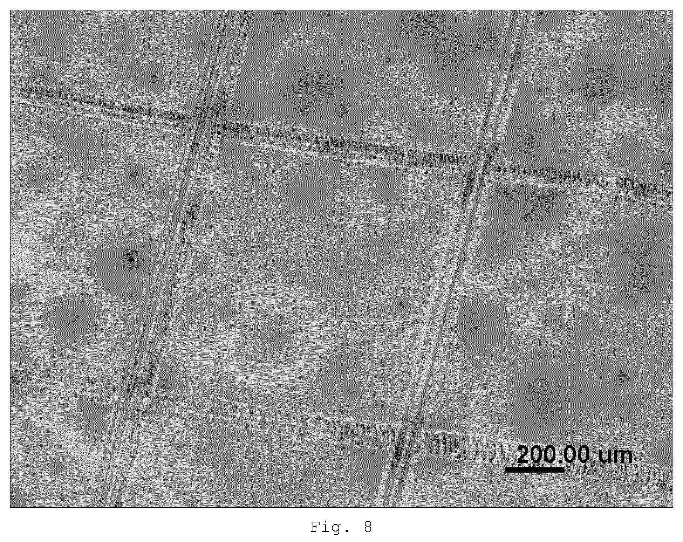

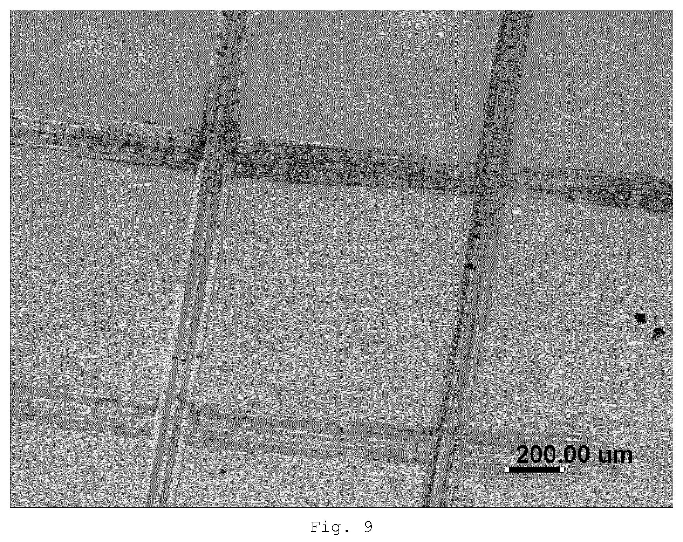

Die Adhäsionsqualität der Beschichtungen wurde mit einem Gitterschnitt Test und durch Klebeband-Test gemäß ASTM D3359 untersucht. Die gemessenen Adhäsionswerte sind 5/5 (dies bedeutet 100 % Adhäsion beim Gitterschnitt Test und 100 % Adhäsion nach dem Klebeband-Test auf der geschnittenen Testfläche) für die Beispiele 6 und 7 sowie 4/4 für Beispiel 5. Die Testergebnisse sind auch in den Figuren 7 bis 9 dargestellt und in Tabelle 1 zusammengefasst.

### Brechungsindizes (n) und Dicke der Beschichtungen

Die Brechungsindizes und Dicke der Beschichtungen wurden mit Ellipsometrie gemessen (J. A. Woollan Co, Inc. M-2000 DI, Spectroscopic Ellipsometer). Die Ergebnisse sind in Tabelle 2 angegeben.

### Untersuchungen der Morphologie und Mikrostruktur

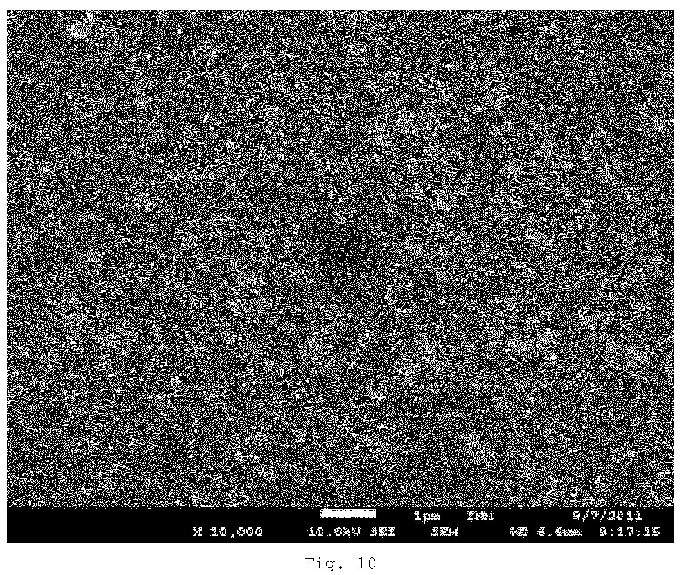

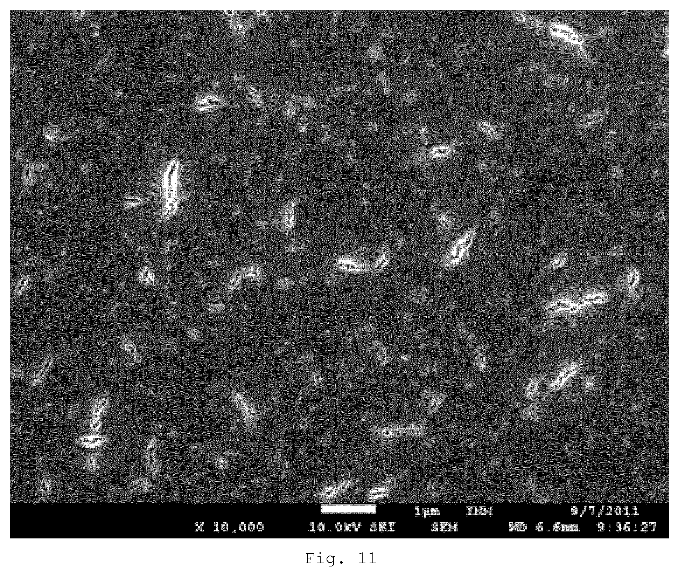

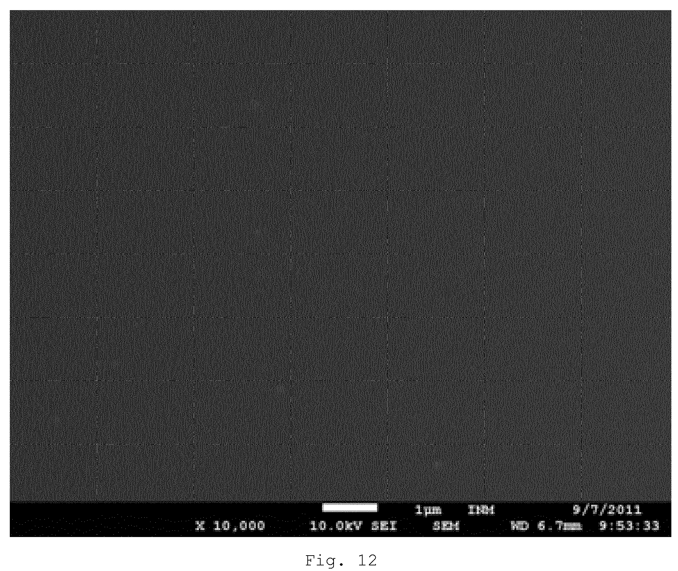

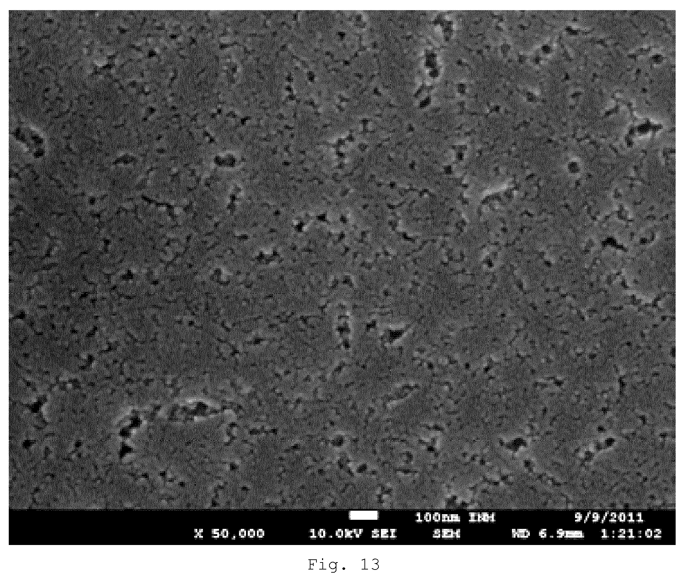

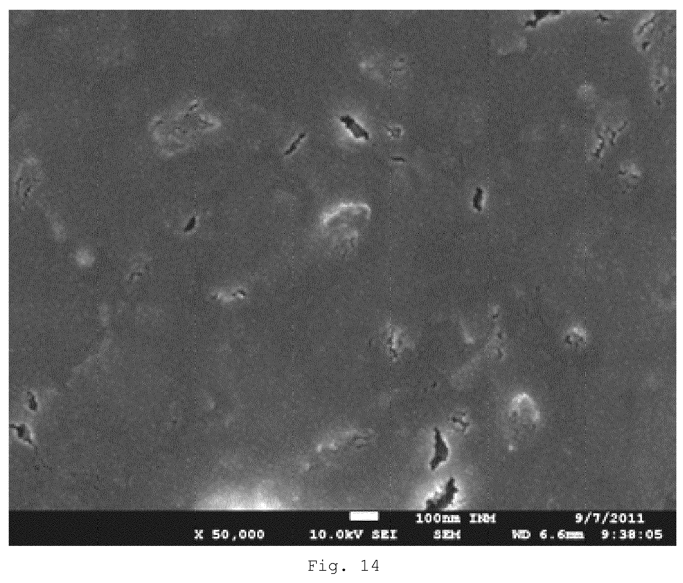

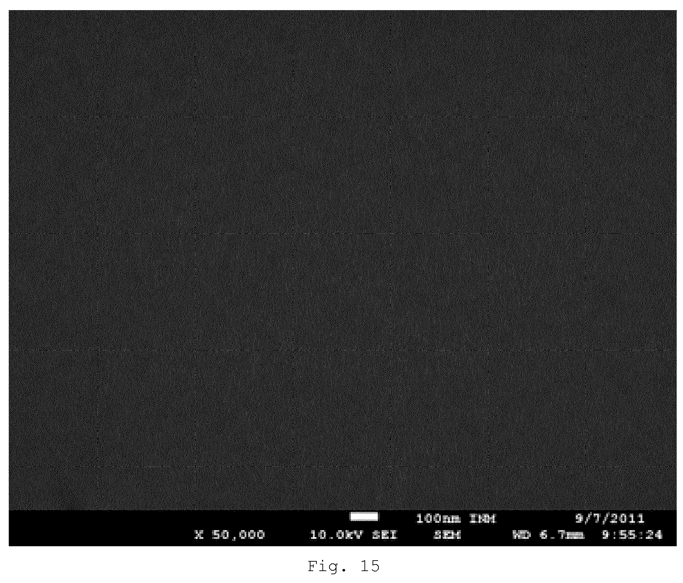

Die Morphologie und Mikrostruktur der Strukturen wurde mit Hilfe von Rasterelektronenmikroskopie (REM) untersucht. Abbildungen der Beschichtungen aus den Beispielen 5, 6 und 7 sind in den Figuren 10 bis 15 dargestellt.

### Photokatalytische Aktivität

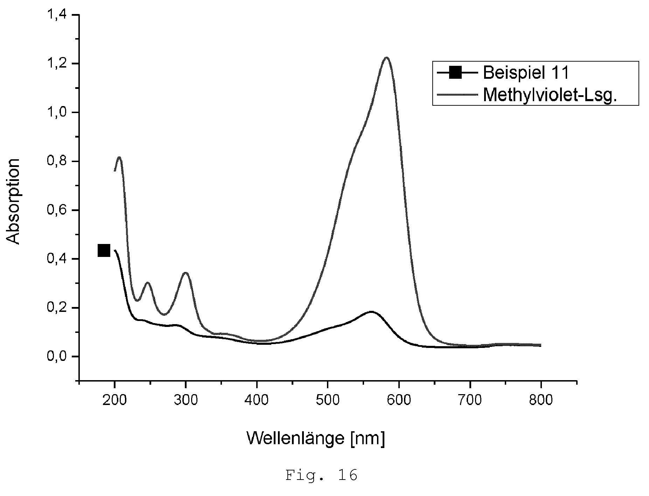

In Figur 16 ist eine Messung der photokatalytischen Aktivität der Beschichtung aus Beispiel 11 gezeigt.

Die Messung wurde an einem Heraeus Suntest CPS mit Xenonstrahler durchgeführt, dazu wurde der beschichtete Objektträger mit 150g einer Lösung von 10 mg/l Methylviolett in Wasser bedeckt und für 10h belichtet. Es wurde regelmäßig (alle 30 Min) verdunstetes Wasser aufgefüllt. Die Messung erfolgte nach Beendigung des Versuchs nach 10 Stunden.

### Vergleichsexperimente

Ohne die Metallverbindung, d.h. Beispiel 1 wurden keine brauchbaren Schichten erhalten.

**Tabelle 1**

| | Kratzfestigkeitstest (Bleistifthärte) | Adhäsion (Gitterschnitt-Test / Klebeband-Test) |
|---|---|---|
| Beispiel 5 | 1H | 4/4 |
| Beispiel 6 | 8H | 5/5 |
| Beispiel 7 | 8H | 5/5 |

**Tabelle 2**

| | Dicke (nm) | Brechungsindex (n) |
|---|---|---|
| Beispiel 5 | 96 | 1.3189 |
| Beispiel 6 | 88 | 1.4090 |
| Beispiel 7 | 104 | 1.4588 |

### zitierte Literatur

1 F. Guillemot, A. Brunet-Bruneau, E. Bourgeat-Lami, T. Gacoin, E. Barthel and J.-P. Boilot, Chem. Mater. 2010, 22, 2822-2828.
2 M. C. Bautista and A. Morales, Sol. Energy Mater. Sol. Cells 2003, 80, 217-225.
3 B. B. Troitskii, Yu. A. Mamaev, A. A. Babin, M.A. Lopatin, V. N. Denisova, M. A. Novikova, L. V. Khokhlova and T. I. Lopatina, Glass Physics and Chemistry, 2010, 36 (5), 609-616.
4 P. Falcaro, L. Malfatti, T. Kidchob, G. Giannini, A. Falqui, M. F. Casula, H. Amenitsch, B. Marmiroli, □ G. Grenci and P. Innocenzi, Chem. Mater. 2009, 21, 2055-2061.
5 K. Biswas, S. Gangopadhyay, H.-C. Kim and R. D. Miller, Thin Solid Films 2006, 514, 350-354.
6 O. M. Yaghi and H. Li, J. Am. Chem. Soc. 1995,117, 10401-10402.
7 C. Janiak, Dalton Trans., 2003, 2781-2804.
8 Jesse L.C. Rowsell, Omar M. Yaghi, Microporous and Mesoporous Materials 73 (2004) 3- 14.
9 J. D. Figueroa; T. Fout; S. Plasynski; H. Mcllyried; R. D. Srivastava, Int. J. Greenhouse Gas Contr. 2008, 2, 9-20.
10 Corma, H. Garca and F. X. Llabrés i Xamena, Chem. Rev. 2010, 110, 4606-4655.

## Patentansprüche

1. Zusammensetzung zur Herstellung einer Antireflexionsbeschichtung, **dadurch gekennzeichnet, dass**
die Zusammensetzung folgende Bestandteile umfasst
a) mindestens eine hydrolysierbare Silanverbindung;
b) mindestens eine hydrolysierbare Metallverbindung, wobei die Verbindung auch teilweise hydrolysiert und/oder kondensiert vorliegen kann;
c) mindestens eine organische Verbindung mit mindestens zwei funktionellen koordinativen Gruppen oder Vorstufen davon; und
d) mindestens ein Lösungsmittel, wobei die Bestandteile a), b) und c) zumindest teilweise ein Koordinationspolymer bilden.

2. Zusammensetzung nach Anspruch 1, **dadurch gekennzeichnet, dass**
die organische Verbindung mindestens zwei funktionelle Gruppen oder Vorstufen davon aufweist, ausgewählt aus der Gruppe Aminogruppe, Carbonsäuregruppen, Hydroxylgruppen und Thiole.

3. Zusammensetzung nach einem der Ansprüche 1 oder 2, **dadurch gekennzeichnet, dass**
die organische Verbindung eine Di-, Tri- oder Tetracarbonsäure, Di-, Tri- oder Tetracarbonsäureester und/oder ein Anhydrid und/oder Ester einer solchen Verbindung ist.

4. Zusammensetzung nach einem der Ansprüche 1 bis 3, **dadurch gekennzeichnet, dass**
die hydrolysierbare Metallverbindung eine Verbindung der Formel MXₙ ist, wobei X ein hydrolysierbarer Rest ist und M ausgewählt ist aus den Gruppen Ia, IIa, IIIa, IVa bis VIa und Ib bis VIIIb und n der Wertigkeit des Metalls entspricht.

5. Zusammensetzung nach Anspruch 4, **dadurch gekennzeichnet, dass**
M ausgewählt ist aus der Gruppe umfassend Al, B, Sn, Fe, Ti, Zr, V oder Zn.

6. Zusammensetzung nach Anspruch 5, **dadurch gekennzeichnet, dass** M ausgewählt ist aus Ti oder Zr.

7. Zusammensetzung nach einem der Ansprüche 2 bis 6, **dadurch gekennzeichnet, dass**
die funktionelle Gruppe eine Carbonsäuregruppe oder eine Vorstufe davon ist.

8. Zusammensetzung nach einem der Ansprüche 1 bis 7, **dadurch gekennzeichnet, dass**
die mindestens eine Metallverbindung mit Wasser umgesetzt wird.

9. Zusammensetzung nach einem der Ansprüche 1 bis 8, **dadurch gekennzeichnet, dass**
das molare Verhältnis von Silizium und Metallion der Verbindungen a) und b) zwischen 100:1 und 1:2 beträgt

10. Verfahren zur Herstellung einer Antireflexionsbeschichtung umfassend folgende Schritte
a) Herstellen einer Zusammensetzung nach einem der Ansprüche 1 bis 9
b) Auftragen der Zusammensetzung auf ein Substrat;
c) thermische Behandlung der Beschichtung.

11. Antireflexionsbeschichtung erhalten nach dem Verfahren gemäß Anspruch 10.

12. Beschichtetes Substrat mit einer Beschichtung nach Anspruch 11.

13. Verwendung einer Antireflexionsbeschichtung in optischen Elementen.

## Claims

1. Composition for producing an antireflective coating, **characterized in that**
the composition comprises the following constituents:
a) at least one hydrolyzable silane compound;
b) at least one hydrolyzable metal compound, it also being possible for the compound to be present in partially hydrolyzed and/or condensed form;
c) at least one organic compound having at least two functional coordinative groups or precursors thereof; and
d) at least one solvent, wherein the constituents a), b), and c) at least partly form a coordination polymer.

2. Composition according to Claim 1, **characterized in that**
the organic compound has at least two functional groups or precursors thereof, selected from the group of amino group, carboxylic acid groups, hydroxyl groups, and thiols.

3. Composition according to either of Claims 1 and 2, **characterized in that**
the organic compound is a dicarboxylic, tricarboxylic or tetracarboxylic acid, dicarboxylic, tricarboxylic or tetracarboxylic ester and/or an anhydride and/or ester of such a compound.

4. Composition according to any of Claims 1 to 3, **characterized in that**
the hydrolyzable metal compound is a compound of the formula MXₙ, where X is a hydrolyzable radical and M is selected from the groups Ia, IIa, IIIa, IVa to VIa, and Ib to VIIIb, and n corresponds to the valence of the metal.

5. Composition according to Claim 4, **characterized in that**
M is selected from the group encompassing Al, B, Sn, Fe, Ti, Zr, V, or Zn.

6. Composition according to Claim 5, **characterized in that** M is selected from Ti or Zr.

7. Composition according to any of Claims 2 to 6, **characterized in that** the functional group is a carboxylic acid group or a precursor thereof.

8. Composition according to any of Claims 1 to 7, **characterized in that** the at least one metal compound is reacted with water.

9. Composition according to any of Claims 1 to 8, **characterized in that**
the molar ratio of silicon to metal ion in the compounds a) and b) is between 100:1 and 1:2.

10. Method for producing an antireflective coating, comprising the following steps:
a) producing a composition according to any of Claims 1 to 9
b) applying the composition to a substrate;
c) heat-treating the coating.

11. Antireflective coating obtained by the method according to Claim 10.

12. Coated substrate with a coating according to Claim 11.

13. Use of an antireflective coating in optical elements.

## Revendications

1. Composition pour la fabrication d'un revêtement antireflet, **caractérisée en ce que** la composition comprend les constituants suivants :
a) au moins un composé de silane hydrolysable ;
b) au moins un composé métallique hydrolysable, le composé pouvant également se présenter sous forme partiellement hydrolysée et/ou condensée ;
c) au moins un composé organique contenant au moins deux groupes de coordination fonctionnels ou leurs précurseurs ; et
d) au moins un solvant, les constituants a), b) et c) formant au moins partiellement un polymère de coordination.

2. Composition selon la revendication 1, **caractérisée en ce que** le composé organique comprend au moins deux groupes fonctionnels ou leurs précurseurs, choisis dans le groupe constitué par les groupes amino, les groupes acide carboxylique, les groupes hydroxyle et les thiols.

3. Composition selon l'une quelconque des revendications 1 ou 2, **caractérisée en ce que** le composé organique est un acide di-, tri- ou tétracarboxylique, un ester d'acide di-, tri- ou tétracarboxylique et/ou un anhydride et/ou un ester d'un tel composé.

4. Composition selon l'une quelconque des revendications 1 à 3, **caractérisée en ce que** le composé métallique hydrolysable est un composé de formule MXₙ, X étant un radical hydrolysable et M étant choisi dans les groupes Ia, IIa, IIIa, IVa à VIa et Ib à VIIIb, et n correspondant à la valence du métal.

5. Composition selon la revendication 4, **caractérisée en ce que** M est choisi dans le groupe comprenant Al, B, Sn, Fe, Ti, Zr, V ou Zn.

6. Composition selon la revendication 5, **caractérisée en ce que** M est choisi parmi Ti ou Zr.

7. Composition selon l'une quelconque des revendications 2 à 6, **caractérisée en ce que** le groupe fonctionnel est un groupe acide carboxylique ou un précurseur de celui-ci.

8. Composition selon l'une quelconque des revendications 1 à 7, **caractérisée en ce que** ledit au moins un composé métallique est mis en réaction avec de l'eau.

9. Composition selon l'une quelconque des revendications 1 à 8, **caractérisée en ce que** le rapport molaire entre le silicium et l'ion métallique des composés a) et b) est compris entre 100:1 et 1:2.

10. Procédé de fabrication d'un revêtement antireflet comprenant les étapes suivantes :
a) la fabrication d'une composition selon l'une quelconque des revendications 1 à 9 ;
b) l'application de la composition sur un substrat ;
c) le traitement thermique du revêtement.

11. Revêtement antireflet obtenu par le procédé selon la revendication 10.

12. Substrat revêtu avec un revêtement selon la revendication 11.

13. Utilisation d'un revêtement antireflet dans des éléments optiques.
